# EUROPEAN PATENT APPLICATION

(11) **EP 3 315 444 A1**
(43) Date of publication of application: **02.05.2018**
(21) Application number: 16290217.5
(22) Date of filing: 26.10.2016
(51) Int. Cl.: B66B 1/46

(54) **SUPPORT ASSEMBLY FOR ELEVATOR CAR OPERATING PANEL**

(71) Applicant: Otis Elevator Company, Farmington CT 06032 (US)
(72) Inventor: Peigne, Victor, 45500 Gien (FR); Blondel, Stephane, 45500 Gien (FR)
(74) Representative: Schmitt-Nilson Schraud Waibel Wohlfrom Patentanwälte Partnerschaft mbB

(57) **Abstract**

Support assemblies for car operating panels including a first support member having a respective panel retention cavity and a respective bracket retention cavity, a second support member having a respective panel retention cavity and a respective bracket retention cavity, and a bracket extending between the first support member and the second support member and fixedly attached to the first and second support members at the respective bracket retention cavities. The respective panel retention cavities are each configured to receive a portion of a front panel of a car operation panel, and, when the front panel is installed into the assembly, the first support member, the second support member, and the bracket provide structural support to the front panel. The first and second support members can be formed of light diffusing material.

## Description

### BACKGROUND

The subject matter disclosed herein generally relates to elevator systems and, more particularly, to elevator car operating panels and support assemblies thereof.

User interface components, such as kiosks, elevator car operating panels, and call buttons, are typically offered as standardized products. The designs of such user interface components are limited to a small product family while balancing product portfolio with manufacturing and maintenance costs. It may be advantageous to provide improved options for user interfaces to enable improved user experience.

### SUMMARY

According to one embodiment, support assemblies for car operating panels are provided. The support assemblies include a first support member having a respective panel retention cavity and a respective bracket retention cavity, a second support member having a respective panel retention cavity and a respective bracket retention cavity, and a bracket extending between the first support member and the second support member and fixedly attached to the first and second support members at the respective bracket retention cavities. The respective panel retention cavities are each configured to receive a portion of a front panel of a car operation panel, and, when the front panel is installed into the assembly, the first support member, the second support member, and the bracket provide structural support to the front panel.

In addition to one or more of the features described herein, or as an alternative, further embodiments of the support assembly may include that at least one of the first support member and the second support member include an electronics package configured to enable illumination of a car operating panel installed within the assembly.

In addition to one or more of the features described herein, or as an alternative, further embodiments of the support assembly may include that the electronics package includes at least one lighting element.

In addition to one or more of the features described herein, or as an alternative, further embodiments of the support assembly may include that the support member having the electronics package includes a diffuser configured to diffuse light generated by the electronics package to illuminate the car operating panel.

In addition to one or more of the features described herein, or as an alternative, further embodiments of the support assembly may include that the support member having the electronics package or a portion thereof is translucent, transparent, or formed from a light diffusing material.

In addition to one or more of the features described herein, or as an alternative, further embodiments of the support assembly may include that the support member having the electronics package includes a light manipulating element configured to control the illumination of the front panel.

In addition to one or more of the features described herein, or as an alternative, further embodiments of the support assembly may include that the front panel of the car operating panel is curved.

According to another embodiment, elevator cars are provided. The elevator cars include a panel frame configured to form part of an elevator car wall and defining a channel, a front panel of a car operating panel, and a support assembly to retain and support the front panel to the panel frame. The support assembly includes a first support member having a respective panel retention cavity and a respective bracket retention cavity, a second support member having a respective panel retention cavity and a respective bracket retention cavity, and a bracket extending between the first support member and the second support member and fixedly attached to the first and second support members at the respective bracket retention cavities. The front panel is retained within the panel retention cavities of the first and second supports, and the support assembly fits within the channel of the panel frame to retain the front panel of the car operating panel.

In addition to one or more of the features described herein, or as an alternative, further embodiments of the elevator car may include that at least one of the first support member and the second support member include an electronics package configured to enable illumination of the front panel.

In addition to one or more of the features described herein, or as an alternative, further embodiments of the elevator car may include that the electronics package includes at least one lighting element.

In addition to one or more of the features described herein, or as an alternative, further embodiments of the elevator car may include that the support member having the electronics package includes a diffuser configured to diffuse light generated by the electronics package to illuminate the car operating panel.

In addition to one or more of the features described herein, or as an alternative, further embodiments of the elevator car may include that the support member having the electronics package or a portion thereof is translucent, transparent, or formed from a light diffusing material.

In addition to one or more of the features described herein, or as an alternative, further embodiments of the elevator car may include that the support member having the electronics package includes a light manipulating element configured to control the illumination of the front panel.

In addition to one or more of the features described herein, or as an alternative, further embodiments of the elevator car may include that the front panel is curved.

In addition to one or more of the features described herein, or as an alternative, further embodiments of the elevator car may include elevator control elements supported by the bracket.

Technical effects of embodiments of the present disclosure include support assemblies for car operating panels and/or parts thereof that enable curved or other geometric shapes. Further technical effects include support assemblies for car operating panels and/or parts thereof that enable lighting of the car operating panels from the support assemblies.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a schematic illustration of an elevator system that may employ various embodiments of the present disclosure;
FIG. 2 is a schematic illustration of a landing floor of an elevator system with a hall call panel that may employ various embodiments of the present disclosure;
FIG. 3 is a schematic illustration of a car wall panel of an elevator system with a car operating panel that may employ various embodiments of the present disclosure;
FIG. 4 is a schematic illustration of an elevator car having a car operating panel installed in an elevator car wall in accordance with an embodiment of the present disclosure;
FIG. 5A is a top-down perspective illustration of a front panel and support assembly having support members and a bracket as installed in a panel frame of an elevator car wall in accordance with an embodiment of the present disclosure;
FIG. 5B is an enlarged illustration of a support member of FIG. 5A used to install and support the front panel within the panel frame;
FIG. 5C is a top down schematic illustration of a support member supporting and retaining the front panel of FIG. 5A in the panel frame;
FIG. 5D is an exploded schematic illustration of the support assembly of FIG. 5A in accordance with a non-limiting embodiment of the present disclosure;
FIG. 5E is a schematic illustration of the support assembly of FIG. 5A as shown retaining the front panel prior to installation into the panel frame;
FIG. 5F is a top down schematic illustration illustrating the installation of the support assembly and front panel of FIG. 5A into the panel frame;
FIG. 5G is a cross-section illustration of a portion of the support assembly of FIG. 5A; and
FIG. 6 is a schematic illustration of an alternative configuration of a support member of a support assembly in accordance with an embodiment of the present disclosure.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

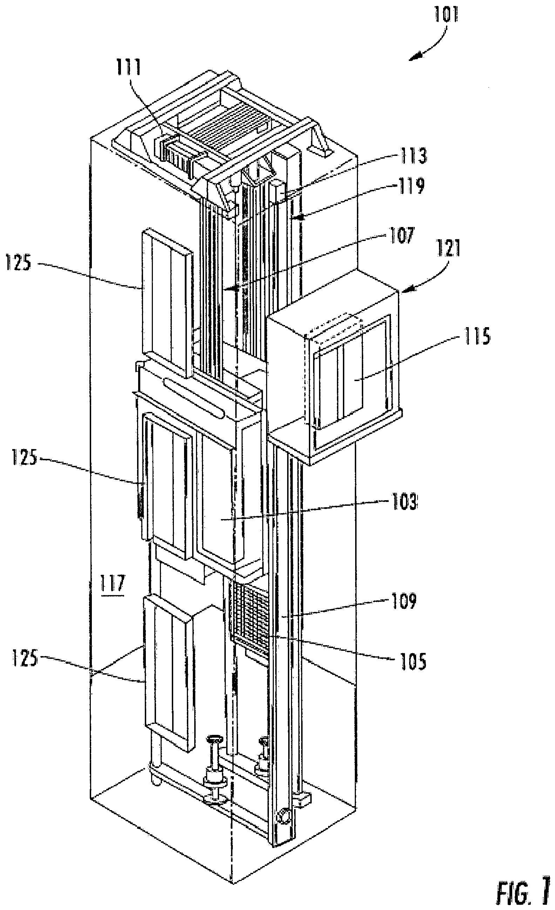

FIG. 1 is a perspective view of an elevator system 101 including an elevator car 103, a counterweight 105, a roping 107, a guide rail 109, a machine 111, a position encoder 113, and an elevator controller 115. The elevator car 103 and counterweight 105 are connected to each other by the roping 107. The roping 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The roping 107 engages the machine 111, which is part of an overhead structure of the elevator system 101. The machine 111 is configured to control movement between the elevator car 103 and the counterweight 105. The position encoder 113 may be mounted on an upper sheave of a speed-governor system 119 and may be configured to provide position signals related to a position of the elevator car 103 within the elevator shaft 117. In other embodiments, the position encoder 113 may be directly mounted to a moving component of the machine 111, or may be located in other positions and/or configurations as known in the art.

The elevator controller 115 is located, as shown, in a controller room 121 of the elevator shaft 117 and is configured to control the operation of the elevator system 101, and particularly the elevator car 103. For example, the elevator controller 115 may provide drive signals to the machine 111 to control the acceleration, deceleration, leveling, stopping, etc. of the elevator car 103. The elevator controller 115 may also be configured to receive position signals from the position encoder 113. When moving up or down within the elevator shaft 117 along guide rail 109, the elevator car 103 may stop at one or more landings 125 as controlled by the elevator controller 115. Although shown in a controller room 121, those of skill in the art will appreciate that the elevator controller 115 can be located and/or configured in other locations or positions within the elevator system 101.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. Although shown and described with a roping system, elevator systems that employ other methods and mechanisms of moving an elevator car within an elevator shaft may employ embodiments of the present disclosure. FIG. 1 is merely a non-limiting example presented for illustrative and explanatory purposes. It should be understood that the common platform user interface touch system may be used in any type of system where interaction or input is desired from a user.

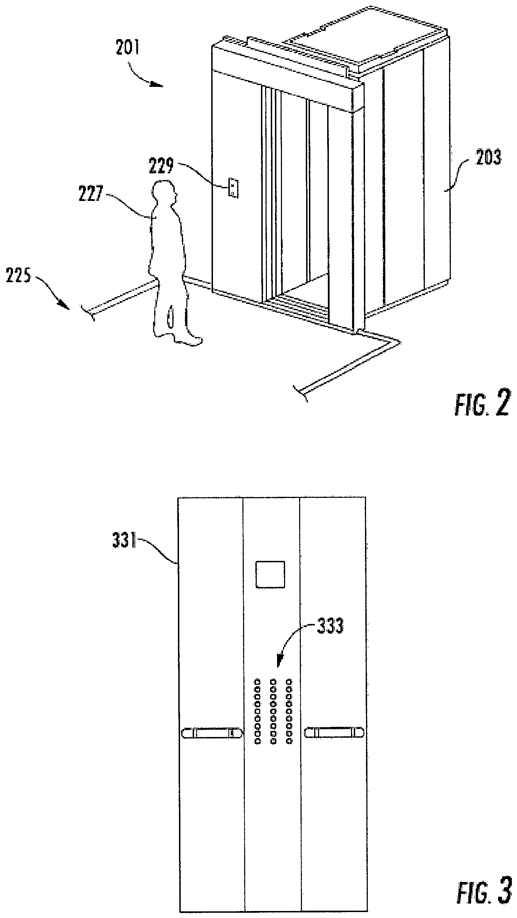

FIG. 2 is a schematic illustration of an elevator system 201 that may incorporate embodiments disclosed herein. As shown in FIG. 2, an elevator car 203 is located at a landing 225. The elevator car 203 may be called to the landing 225 by a passenger 227 that desires to travel to another floor within a building. The passenger 227 can call the elevator car 203 by pressing a call button on a hall call panel 229. The hall call panel 229 is in operable communication with an elevator controller (e.g., elevator controller 115 of FIG. 1) and can make a request such that an elevator car will stop at the landing 225. The hall call panel 229 can be used to request travel in a desired direction (e.g., up or down), as known in the art. When the elevator car 203 reaches the landing 225, one or more elevator doors, including elevator car doors and landing doors, may open, allowing the passenger 227 to enter or exit the elevator car 203.

FIG. 3 is a schematic illustration of an elevator car wall 331 that includes a car operating panel 333. The car operating panel 333, in traditional elevator system configurations, is a fixed and usually flat operating panel that enables passengers to select floors to travel within a building and/or provide other operation (e.g., maintenance operations, emergency operations, etc.). That is, the car operation panel 333 may include physical or mechanical buttons that are preset and fit without a particular physical layout. However, it may be advantageous to enable different configurations within an elevator car, such as curved or geometric car operating panels. Such geometric car operating panels may require additional structural support and/or strength to function as a car operating panel. Accordingly, in accordance with various embodiments of the present disclosure, robust curved car operating panels are enabled.

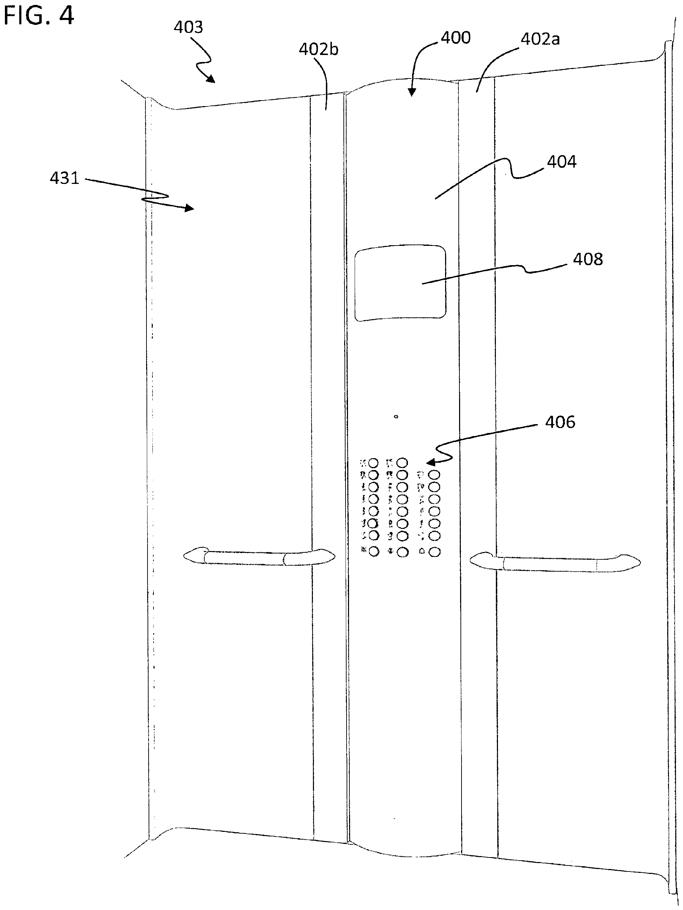

For example, turning now to FIG. 4, a schematic illustration of an elevator car 403 having a car operating panel 400 installed in an elevator car wall 431 in accordance with an embodiment of the present disclosure is shown. The car operating panel 400 is a curved front panel, as illustrated in FIG. 4, although other geometric shapes or configurations are possible without departing from the scope of the present disclosure (e.g., flat, box, square, undulating, ribbed, etc.). The curved car operating panel 400 is retained within the elevator car wall 431 by a first panel frame portion 402a and a second panel frame portion 402b. In some embodiments, the first and second panel frame portions 402a, 402b can be part of a single frame and in other embodiments, the first and second panel frame portions 402a, 402b can be separate frame elements.

The curved car operating panel 400 includes a panel body 404 that includes a control interface 406 and a notification element 408. The control interface 406 can include physical or virtual buttons and/or input elements to allow passengers or other users of the elevator to control the elevator (e.g., select destination floors, enter emergency mode of operation, enter maintenance mode of operation, etc.). The notification element 408 can be a display or other indicator device that is configured to provide and/or display information to passengers within the elevator car 403. In some configurations, the notification element 408 can be a television screen or display that is used to display advertisements, weather, or other live or recorded video. In other configurations, the notification element 408 can be a display that indicates the current floor where the elevator 403 is located. Thus, the notification element 408 and/or the control interface 406 can take various forms without departing from the scope of the present disclosure.

As noted above, curved car operating panels, such as that shown in FIG. 4, may require structural support to retain the car operating panel within or to the elevator car wall. Accordingly, various embodiments of the present disclosure are directed to provide structural support and robustness to curved or geometric car operating panels, along with other functionality and/or features.

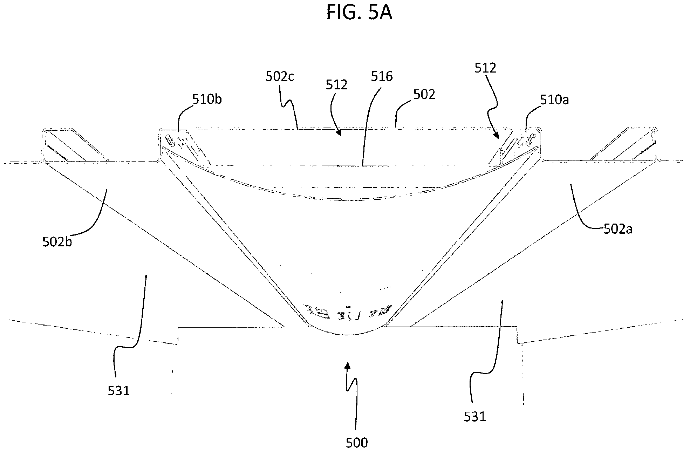

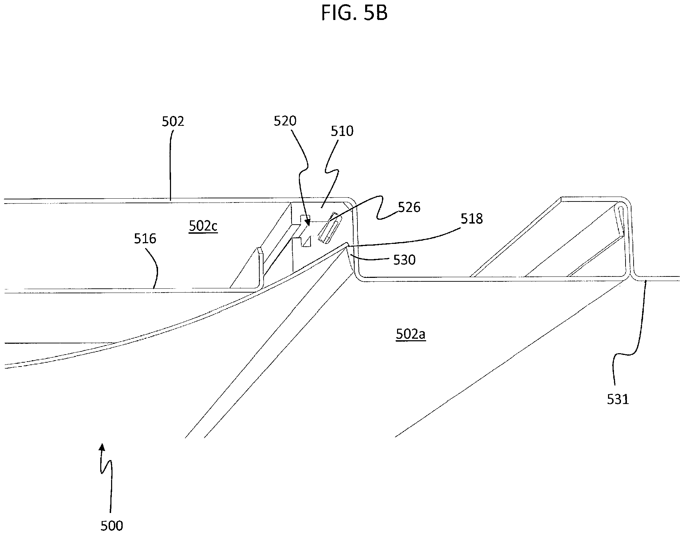

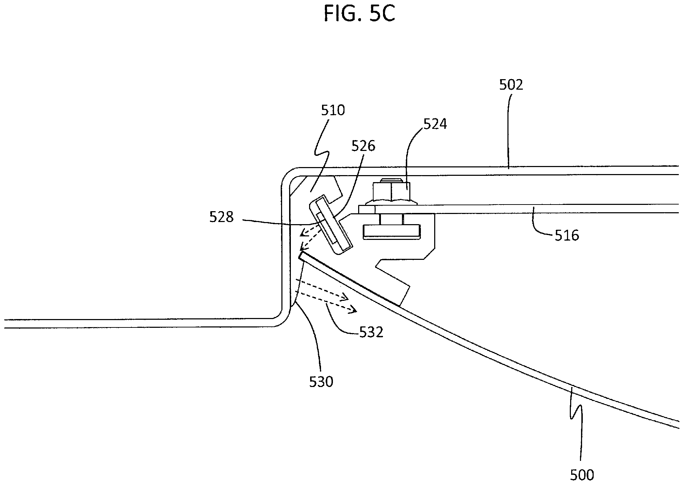

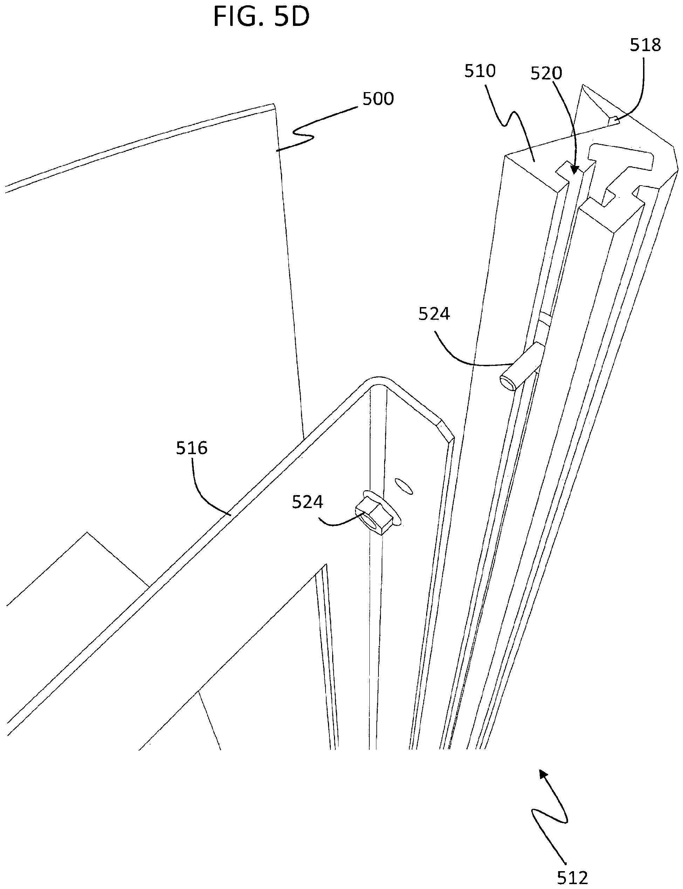

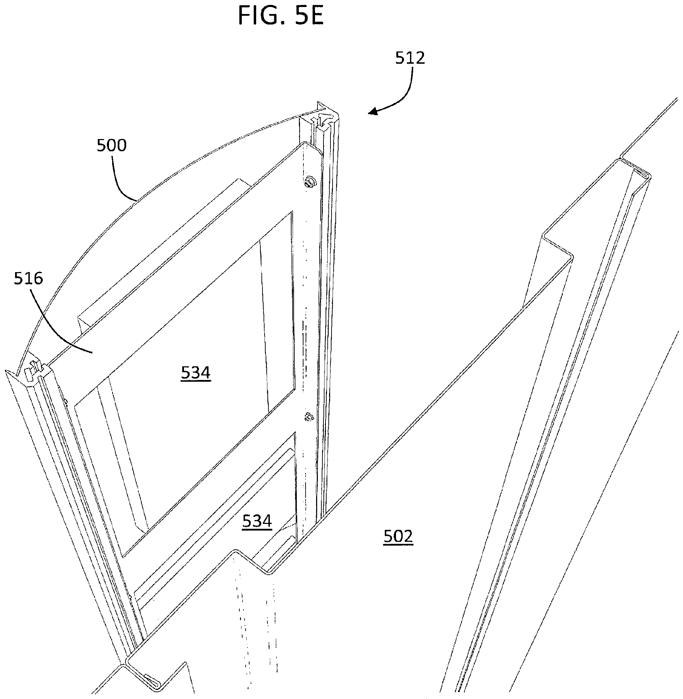

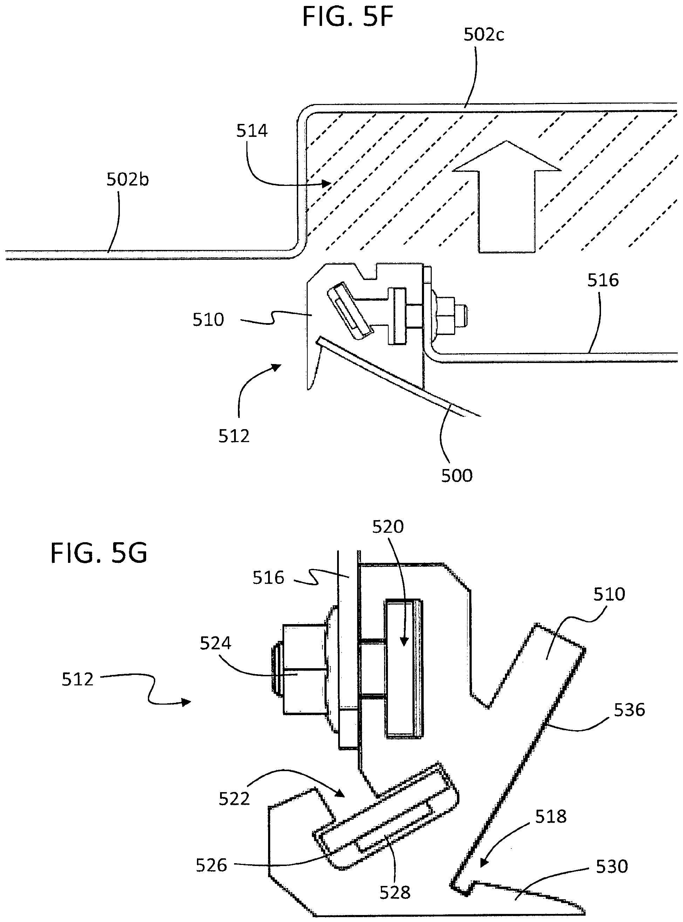

Turning now to FIGS. 5A-5G, various schematic illustrations of a curved car operating front panel 500 and support assembly 512 in accordance with a non-limiting embodiment of the present disclosure are shown. FIG. 5A is a top-down perspective illustration of the front panel 500 as installed in an elevator car wall 531 of an elevator car. FIG. 5B is an enlarged illustration of a support member 510 used to install and support the front panel 500 within a panel frame 502. FIG. 5C is a top down schematic illustration of a support member 510 supporting and retaining the front panel 500 into the panel frame 502. FIG. 5D is an exploded schematic illustration of a support assembly 512 in accordance with a non-limiting embodiment of the present disclosure. FIG. 5E is a schematic illustration of the support assembly 512 as retaining the front panel 500 prior to installation into a panel frame 502. FIG. 5F is a top down schematic illustration illustrating the installation of the support assembly 512 and front panel 500 into the panel frame 502. FIG. 5G is a cross-section illustration of a portion of the support assembly 512 showing detail thereof.

As shown in FIG. 5A, a car operating front panel 500 is retained by the support assembly 512 within a portion of the elevator car wall 531. The front panel 500 may be similar to that shown and described above and may include features as described above. As shown, the elevator car wall 531 includes a panel frame 502 having a first panel frame portion 502a, a second panel frame portion 502b, and a third panel frame portion 502c. The first, second, and third panel frame portions 502a, 502b, 502c define a channel 514 that is sized and shaped to receive the front panel 500 and the support assembly 512 (see, for example, FIG. 5F). As shown, first and second frame panel portions 502a, 502b can engage with and be fixedly secured to the elevator car wall 531. Such connection between the frame panel portions 502a, 502b can be by fasteners (e.g., screws, nails, bolts, etc.), adhesives, welding, interference fit, etc. as will be appreciated by those of skill in the art.

The support assembly 512 is configured to receive the front panel 500 and support and provide rigidity to the front panel 500. As shown in FIGS. 5A-5F, the support assembly 512 includes a first support member 510a and a second support member 510b. Disposed between the first and second support members 510a, 510b is a bracket 516. The combination of the first and second support members 510a, 510b and the bracket 516 are configured to receive the front panel 500 (curved or otherwise). Further, the first and second support members 510a, 510b are configured to fit within the channel 514 defined by the panel frame 502. In some embodiments, such as illustrated in FIGS. 5A-5F, the first and second support members 510a, 510b can form an interference fit within the panel frame 502 to be retained within the channel 514. In other embodiments, the first and second support members 510a, 510b can be fixedly attached or connected to the panel frame 502 and/or another structural feature of an elevator car (e.g., ceiling, floor, etc.).

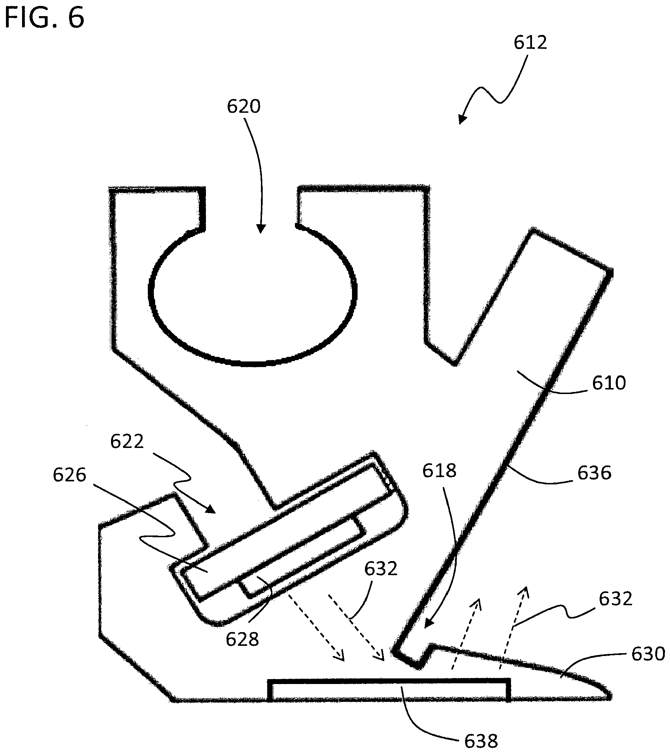

With reference to FIG. 5G, a detailed schematic illustration of a portion of the support assembly 512 is shown. In FIG. 5G, the second support member 510b is shown, but those of skill in the art will appreciate that the first support member 510a has a similar structure and features (see also FIG. 6 for additional description and illustration of a support member 610 in accordance with an embodiment of the present disclosure). Herein after, when referring to one or both of the support elements, reference will be made to "support member 510." The support member 510 includes or defines a panel retention cavity 518 that is sized and shaped to receive an edge of the front panel 500. Further, as shown, the support member 510 includes or defines a bracket retention cavity 520 and an electronics cavity 522, as described herein. The bracket retention cavity 520 is configured to receive a portion of a fastener 524 that fixedly secures the bracket 516 to the support member 510, as shown. The electronics cavity 522 is configured to receive an electronics package 526.

The electronics package 526 can include a lighting element 528 and appropriate electronic control, wiring, and associated components. In some non-limiting examples, the lighting element 528 can be a series of LEDs that span a length of the support member 510. In other embodiments, the lighting element 528 can be one or more lighting components that are configured to illuminate one or more sections (or all) of the front of the front panel 500. In some embodiments, the lighting element 528 can be configured to provide illumination for at least a control interface and/or a notification element as described above. As shown, the support member 510 includes a light diffuser 530 that is formed of select material and/or otherwise configured to diffuse light from the lighting element 528 onto and/or across the front panel 500 (see, e.g., FIG. 6). Light 532 generated by the lighting element 528 and diffused by the light diffuser 530 is schematically shown in FIG. 5C as dashed line-arrows.

To enable such light diffusion, the support member 510 or a portion thereof can be formed from a thermoplastic or other material material that is transparent or translucent. That is, in some embodiments, the support members 510 or a portion thereof can be formed from a light diffusing material. Further, because the support members 510 are configured to rigidly support the front panel 500, the material may be selected with sufficient rigidity or strength. For example, in some non-limiting examples, the support member 510 can be formed from a polycarbonate material. However, other materials can be used without departing from the scope of the present disclosure. The formation or manufacture of the support member 510 can be by extrusion, casting, mold, additive manufacturing, or by other technique which may be dependent upon the material used to form the support member 510.

FIG. 5D illustrates an exploded view of the support assembly 512 and the front panel 500. As shown, in this view, the fastener 524 is formed of two parts, such as a screw and nut configuration. In such configuration, the screw may be configured to be movable within the bracket retention cavity 520 of the support member 510 so that the position of the screw can be adjusted. The screw can then pass through an aperture within the bracket 516 and be secured using the nut. In alternative embodiments the bracket 516 can be fixed to the support member by other mechanisms, including but not limited to, adhesive, welding, and/or the bracket and support member(s) can be integrally formed as a single piece.

As shown in FIG. 5E, the bracket 516 is mounted and attached to the support members of the support assembly 512, and the front panel 500 is supported thereby. Also shown in FIG. 5E, the bracket 516 can be configured to support components of a control interface and/or a notification element, collectively labeled as control elements 534 in FIG. 5E. Thus, the control elements 534 can be fixedly secured and retained to the bracket 516 and be accessible and/or displayed on or through the front panel 500.

As noted, the support assembly 512 and particularly the support members 510 are configured to retain and support the front panel 500. As described above, the support members 510 include panel retention cavities 518. In addition to such panel retention cavities 518, the support members 510 can include a panel support surface 536. The panel support surface 536 can provide additional support and/or engagement area between the support members 510 and portions of the front panel 500. Further, in some embodiments, the panel support surface 536 can be used to fixedly attach the front panel 500 to the support member 510. For example, an adhesive can be applied to the panel support surface 536 and the front panel 500 can be bonded or otherwise fixedly attached or connected to the support member 510 at the panel support surface 536.

Turning now to FIG. 6, an alternative configuration of a support member 610 of a support assembly 612 is schematically shown. The support member 610 is similar to that described above and has similar features. For example, as shown, the support member 610 includes a panel retention cavity 618 that is sized and shaped to receive an edge of a front panel, a bracket retention cavity 620, and an electronics cavity 622. An electronics package 626 is housed within the electronics cavity 622 and includes one or more lighting elements 628. The support member 610 includes a panel support surface 636 proximate to the panel retention cavity 618 and can be employed similar to that described above.

As shown in FIG. 6, the support member 610 includes a diffuser 630 similar to that described above and a light manipulating element 638. The light manipulating element 638 can be a reflective surface or structure or can be a structure or material that refracts and/or scatters light 632 generated by the lighting element 628. In other embodiments, the light manipulating element 638 can be a luminescent material or structure that can generate additional light when the light 632 interacts with the light manipulating element 638.

The support members of the present disclosure can take various geometric shapes without departing from the scope of the present disclosure. For example, although a specific geometry is shown in the above described embodiments, such geometry is not to be limiting, but rather is provided for illustrative and explanatory purposes. In various embodiments, the internal cavities of the support members (e.g., electronics cavity, bracket retention cavity) can have various geometries, lengths, locations on the support member, etc. without departing from the scope of the present disclosure. For example, although shown as rectangular (FIGS. 5A-5G) and round (FIG. 6), the internal cavities can have any geometry or shape, such as, but not limited to, rounded, curved, triangular, etc.

Further, although shown with the bracket retention cavity extending a length (e.g., top to bottom) of the support member, such cavity is not to be limited thereto. For example, the bracket retention cavity can be formed of one or more discrete or specific holes, apertures, or short channels formed in the support members, and thus the term "bracket retention cavity" is not to be limited to a single cavity or channel formed within the support member. Further, those of skill in the art will appreciate that the location of the cavities (both within the support member and where openings to the cavities are located) can be varied without departing from the scope of the present disclosure. For example, as shown in FIGS. 5A-5G, the opening to the bracket retention cavity is open in one direction, whereas in FIG. 6, the opening to the bracket retention cavity is open in a different direction.

Moreover, in some configurations, as noted, the cavities can be separated into distinct and/or separate apertures and/or channels. In one such configuration, a plurality of bracket retention cavities can be employed to support multiple, separate brackets (in contrast to a single bracket as shown in the illustrated embodiments).

The above described embodiments are for illustrative and explanatory purposes and various features of the support assembly and/or the support members can be eliminated, changed, and/or have additional features not described herein without departing from the scope of the present disclosure. For example, in some embodiments, the diffuser element can be eliminated, such as if the lighting element is configured closer to the panel retention cavity and thus can adequately illuminate a car operating panel. Further, in some embodiments, the diffuser may not be included due to the inclusion of an appropriate light manipulating element. Further, although shown and described with respect to a curved car operating panel, the support assembly of the present disclosure can be employed with flat or non-curved car operating panels or various other geometry or shaped car operating panels.

The use of the terms "a", "an", "the", and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the spirit and scope of the present disclosure. Additionally, while various embodiments of the present disclosure have been described, it is to be understood that aspects of the present disclosure may include only some of the described embodiments.

Accordingly, the present disclosure is not to be seen as limited by the foregoing description, but is only limited by the scope of the appended claims.

## Claims

1. A support assembly for a car operating panel, the support assembly comprising:
a first support member having a respective panel retention cavity and a respective bracket retention cavity;
a second support member having a respective panel retention cavity and a respective bracket retention cavity; and
a bracket extending between the first support member and the second support member and fixedly attached to the first and second support members at the respective bracket retention cavities,
wherein the respective panel retention cavities are each configured to receive a portion of a front panel of a car operation panel,
wherein, when the front panel is installed into the assembly, the first support member, the second support member, and the bracket provide structural support to the front panel.

2. The support assembly of claim 1, wherein at least one of the first support member and the second support member include an electronics package configured to enable illumination of a car operating panel installed within the assembly.

3. The support assembly of claim 2, wherein the electronics package includes at least one lighting element.

4. The support assembly of any of claims 2-3, wherein the support member having the electronics package includes a diffuser configured to diffuse light generated by the electronics package to illuminate the car operating panel.

5. The support assembly of any of claims 2-4, wherein the support member having the electronics package or a portion thereof is translucent, transparent, or formed from a light diffusing material.

6. The support assembly of any of claims 2-5, wherein the support member having the electronics package includes a light manipulating element configured to control the illumination of the front panel.

7. The support assembly of any of the preceding claims, wherein the front panel of the car operating panel is curved.

8. An elevator car comprising:
a panel frame configured to form part of an elevator car wall and defining a channel;
a front panel of a car operating panel; and
a support assembly to retain and support the front panel to the panel frame, the support assembly comprising:
a first support member having a respective panel retention cavity and a respective bracket retention cavity;
a second support member having a respective panel retention cavity and a respective bracket retention cavity; and
a bracket extending between the first support member and the second support member and fixedly attached to the first and second support members at the respective bracket retention cavities,
wherein the front panel is retained within the panel retention cavities of the first and second supports,
wherein the support assembly fits within the channel of the panel frame to retain the front panel of the car operating panel.

9. The elevator car of claim 8, wherein at least one of the first support member and the second support member include an electronics package configured to enable illumination of the front panel.

10. The elevator car of claim 9, wherein the electronics package includes at least one lighting element.

11. The elevator car of any of claims 9-10, wherein the support member having the electronics package includes a diffuser configured to diffuse light generated by the electronics package to illuminate the car operating panel.

12. The elevator car of any of claims 9-11, wherein the support member having the electronics package or a portion thereof is translucent, transparent, or formed from a light diffusing material.

13. The elevator car of any of claims 9-12, wherein the support member having the electronics package includes a light manipulating element configured to control the illumination of the front panel.

14. The elevator car of any of claims 8-13, wherein the front panel is curved.

15. The elevator car of any of claims 8-14, further comprising elevator control elements supported by the bracket.
